# EUROPEAN PATENT APPLICATION

(11) **EP 1 215 562 A2**
(43) Date of publication of application: **19.06.2002**
(21) Application number: 01129724.9
(22) Date of filing: 13.12.2001
(51) Int. Cl.: G06F 3/023

(54) **Device and method for controlling menu navigation on screen by using directional button**

(30) Priority: 13.12.2000 KR 2000075912
(71) Applicant: SAMSUNG ELECTRONICS Co. Ltd., Kyungki-do, Seoul (KR)
(72) Inventor: Hong, Jun-Il, Kuseong-myeon, Yongin-shi, Kyonggi-do (KR)
(74) Representative: Grünecker, Kinkeldey, Stockmair & Schwanhäusser Anwaltssozietät

(57) **Abstract**

Disclosed is a device having user interface means, which enables a predetermined pointer to point a menu selected from a screen by a user with directional buttons, for controlling a menu shift with directional buttons. The device according to the invention includes a perceiving section for perceiving pushed or released state of the directional buttons to generate a command for shift of a menu or a page depending on the period of time for pushing directional buttons, a pointer carrier for substantially shifting the position of the pointer, which is pointing one of the menus currently being displayed on the screen in response to the generated command for shift of a menu or a page, and a timer for checking whether or not push of the directional button continues for a predetermined period of time, and notifying the checked result to the perceiving section.

## Description

The present invention relates to a device having a user interface, which enables a pointer to point to a menu item or page selected by a user through the use of directional buttons, and in particular, to a device and a method for controlling a menu shift by using directional buttons.

A variety of devices have a user interface that enables a user to select one of the menu pages or menu items displayed on a screen by pressing directional buttons. A mobile wireless telephone is an outstanding example.

Using a mobile wireless telephone often necessitates the selection of diverse menu pages and menu items, as in the case of selecting a particular address from an address list. In that case, the user is required to repeatedly press directional buttons, while viewing a display screen, until the pointer reaches a desired menu page or menu item. If a confirmation button is pressed, an action is performed for the selected menu item.

However, this method of shifting to and selecting a menu page or item consumes considerable amounts of time to select a deeply embedded menu item or page.

It is, therefore, the object of the present invention to provide a device and a method for easily shifting to and selecting a desired menu item or page by differentiating the shift through a menu item by item and the shift through a menu page by page, by discriminating the periods of time for pressing the directional buttons.

To achieve the above object, there is provided a device having a user interface, which enables a predetermined pointer to point to a menu item or page selected from a screen by a user through the use of directional buttons, the device comprising: a recognition module for determining a pressed state or released state of the directional buttons to generate a command for shift of a menu item or a page depending on the period of time the directional button is pressed; a pointer carrier for shifting the position of the pointer in response to the generated command for shift of a menu item or a page; and a timer module for checking if the pressing of the directional button continues for a predetermined period of time, and notifying the checked result to the recognition module.

There is also provided a method for controlling a menu shift by using directional buttons in a device having a user interface, which enables a pointer to point to a menu selected from a menu on a screen by a user through the use of directional buttons, the method comprising: checking for the generation of an event, and determining the kind of the generated event; operating a timer, and returning to the event generation checking step if the generated event is a push of a directional button; shifting the pointer currently pointing to a predetermined menu on the screen to a corresponding menu on the next page, if the generated event is a timer interrupt, to signal a lapse of a predetermined time, and returning to the event generation checking step; and ceasing operation of the timer if the generated event is a release of the directional button, checking whether or not the timer interrupt had been previously generated and returning to the event generation checking step in the affirmative, and returning to the event generation checking step after shifting the pointer to a next menu in the negative.

The above object, features and advantages of the present invention will become more apparent from the following detailed description when taken in conjunction with the accompanying drawings, in which:
Fig. 1 is a block diagram illustrating a device for controlling a menu shift on a screen by using directional buttons according to an embodiment of the present invention; and
Fig. 2 is a flow chart illustrating a method for controlling a menu shift on a screen by using directional buttons according to an embodiment of the present invention.

A preferred embodiment of the present invention will be described herein below with reference to the accompanying drawings. In the following description, well-known functions or constructions are not described in detail since they would obscure the invention in unnecessary detail.

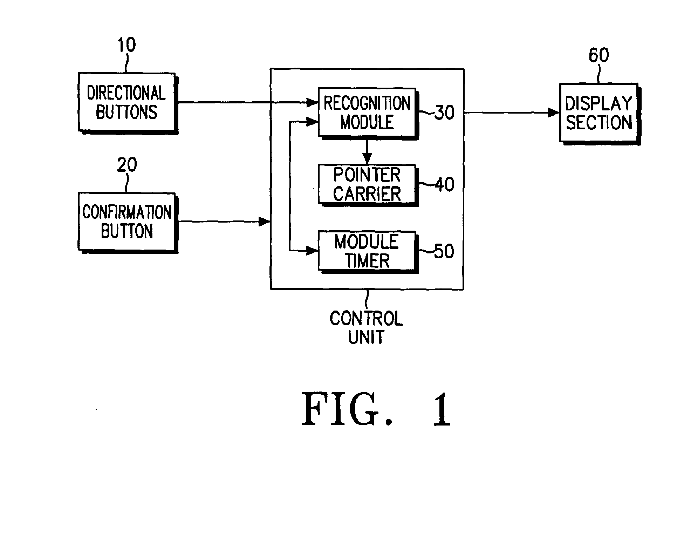

Fig. 1 is a block diagram illustrating a device for controlling a menu shift on a screen by using directional buttons according to an embodiment of the present invention.

Referring to Fig. 1, directional buttons 10 are for allowing a user to shift the current position of a pointer on any one of the menus to another position. In general, a mobile wireless telephone has directional buttons for controlling shift of the pointer in horizontal and vertical directions. A confirmation button 20 is for performing an action designated by a selected menu item. A recognition module 30 is for determining if the directional buttons 10 have been pressed or released, and for generating a command for shifting to a menu item or a page depending on the period of time the directional buttons 10 are pressed.A pointer carrier 40 is a module for shifting the pointer from one menu item to another in response to the generated command for shifting .A timer module 50 is for checking whether or not the press of the directional button 10 continues for a predetermined period of time.As shown in the drawing recognition module section 30, pointer carrier 40 and timer module 50 can be realized by a single control unit.

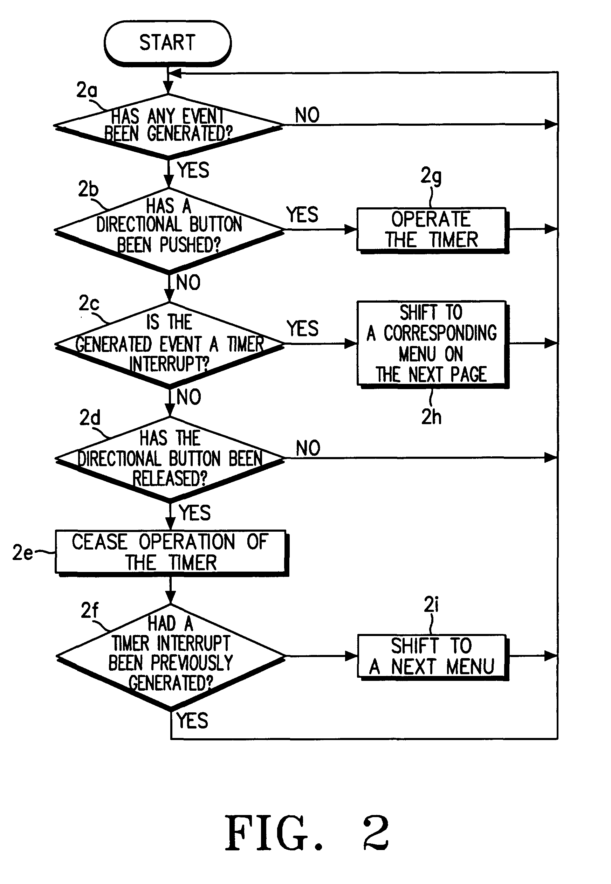

Fig. 2 is a flow chart illustrating a method for controlling a menu shift on a screen by using directional buttons according to an embodiment of the present invention.Referring to Fig. 2, generation of an event is checked in step 2a. An event in this embodiment, is any command or signal generated by the user or the device. If it is determined that an event has been generated, it is checked in step 2b whether or not the generated event is a push of a directional button. If the generated unit is the push of a directional button, the timer 50 is started in step 2g, and the process returns to the step 2a.

If the event is not the push of a directional button in step 2b, the process proceeds to step 2c to check whether or not the event generated in step 2a is a timer interrupt. If it is determined in step 2c that the event is a timer interrupt, it means that the user pushed a directional button for a predetermined period of time. Therefore, step 2h is proceeded to in order to shift the pointer currently pointing to a predetermined menu on the screen to the corresponding menu on the next page. The process then returns to the step 2a.

If it is determined in step 2c that the event is not a timer interrupt, step 2d is proceeded to in order to check whether or not the event generated in the step 2a is a releasing of a directional button. In the affirmative if it is determined in step 2d that the event is the releasing of a directional button, step 2e is proceeded to in order to cease operation of the timer 50. It is checked in step 2f whether or not any timer interrupt had been previously generated. If it is determined in step 2f that a timer interrupt had been previously generated, the process returns to step 2a. Whether or not any timer interrupt had been previously generated can be determined by checking a timer interrupt flag that is set in step 2c when a timer interrupt is generated.

If determined in step 2f that no timer interrupt had been previously generated, the pointer is shifted to the next menu. Then, the process returns to the step 2a. Here, failure to be notified of a timer interrupt from the timer 50 during the period of time for push of a directional button means that the user pushed the directional button for a short period of time. Hence, the menu is shifted by one item toward the direction of the directional button that was pushed.

Assuming that one menu consists of a single line, the menu shift by one item is equivalent to a line shift. For instance, assuming that 5 items, i.e., 5 lines, are displayed on a screen of a terminal and the pointer pointing the second item is commanded to shift the menu by one item, the third item will be pointed by the pointer.

Assuming that one menu consists of a single line, and one page consists of 7 lines, the page shift is equivalent to the shift of 7 lines.

As described above, the present invention has an advantageous effect of curtailing the period of time for selecting a farthest menu among the numerous ones by differentiating the shift of a menu by item from the shift of a page through discrimination of the periods of time for pushing directional buttons.

## Claims

1. A device having a user interface and directional buttons for controlling a menu shift, the device comprising:
a recognition module for determining if a directional button has been pressed and for generating a shift command;
a timer module for determining a time that the directional button is pressed; and
a pointer carrier for shifting the position of the pointer in response to said shift command;
wherein said shift command directs said pointer carrier to shift said pointer to a next menu item if said determined time is less than a preset time, and said shift command directs said pointer carrier to shift said pointer to a next menu page if said determined time is greater than or equal to said preset time.

2. A method for controlling a menu shift in a device having directional buttons and a user interface, the method comprising:
a) checking if an event has been generated , and determining the kind of the generated event;
b) operating a timer, and returning to step a) if the generated event is a push of a directional button;
c) shifting a pointer currently pointing to a predetermined menu on a screen to a corresponding menu on a next page, if the generated event is a timer interrupt that signals lapse of a predetermined time, and returning to step a); and
d) ceasing operation of the timer if the generated event is a release of the directional button, checking whether or not the timer interrupt has been generated previously, and returning to step a) if the timer interrupt has been generated and returning to step a) after shifting the pointer to a next menu if the timer interrupt has not been generated.

3. The method of claim 2, further comprising the step of returning to step a) if the generated event is not a release of the directional button.

4. The method of claim 2 or 3, wherein the device is a mobile wireless telephone and the screen is a display.

5. A method for controlling a menu shift in a device having directional buttons and a user interface, the method comprising:
a) checking whether or not a directional button has been pushed;
b) checking whether or not the push of the directional button continues for a predetermined period of time, if it is determined that a directional button has been pushed;
c) returning to step a) after shifting a pointer currently pointing a predetermined menu on a screen to a corresponding menu on a next page if the push of the directional button continues for the predetermined period of time; and
d) returning to step a) after shifting the pointer to a next menu if the push of the directional button does not continue for the predetermined period of time.

6. A computer program comprising computer program code means for performing all the steps of the method according to any one of the claims 2 to 5, when implemented in a device having a user interface and directional buttons for controlling a menu sheet.
